# EUROPÄISCHE PATENTSCHRIFT

(11) **EP 2 831 472 B1**
(45) Veröffentlichungstag und Bekanntmachung des Hinweises auf die Patenterteilung: **21.06.2017**
(21) Anmeldenummer: 13714855.7
(22) Anmeldetag: 26.03.2013
(51) Int. Cl.: F16J 15/32, B01D 29/15

(54) **ANORDNUNG ZUR BILDUNG EINER ABDICHTUNG**
ARRANGEMENT FOR FORMING A SEAL
SYSTÈME POUR LA CONSTITUTION D'UNE ÉTANCHÉITÉ

(30) Priorität: 27.03.2012 DE 102012006226
(43) Veröffentlichungstag der Anmeldung: 04.02.2015
(73) Patentinhaber: Hydac Filtertechnik GmbH, 66280 Sulzbach/Saar (DE)
(72) Erfinder: SAKRASCHINSKY, Michael, 66386 St. Ingbert (DE); KLEIN, Volkmar, 66482 Zweibrücken (DE); SCHMIDT, Armin, 66557 Illingen (DE)
(74) Vertreter: Bartels, Martin Erich Arthur
(86) Internationale Anmeldenummer: PCT/EP2013/000909
(87) Internationale Veröffentlichungsnummer: WO 2013/143689

(56) Entgegenhaltungen:
- DE-A1-102006 036 231
- GB-A- 2 054 768

## Beschreibung

Die Erfindung betrifft eine Filtervorrichtung mit den Merkmalen im Oberbegriff von Anspruch 1.

Um bei radialen Dichtsystemen eine sichere und druckfeste Abdichtung zu gewährleisten, ist eine ausreichende Größe der Anpresskraft zwischen Dichtelement und Dichtfläche unerlässlich. Um die notwendige Flächenpressung zu erreichen, ist eine nicht unerhebliche Verformung des Dichtelements erforderlich, die bei den besonders häufig zum Einsatz kommenden elastomeren Dichtungswerkstoffen 8 % bis 20 % betragen kann. Die so erreichte Erhöhung der Dichtkraft führt zur Bildung eines entsprechend starken Reibschlusses an der Dichtstelle zwischen den gegeneinander abgedichteten Bauteilen. Wenn es sich um Dichtstellen handelt, die häufiger zu lösen sind, wie dies beispielsweise bei Dichtstellen an Austauschteilen, wie Ersatzteilen oder dergleichen, oder um Wartungsstellen handelt, wo die Abdichtung häufiger zu lösen ist, sind die entsprechenden Ein- und Ausbauvorgänge beträchtlich erschwert. Bei entsprechend großen Dichtkräften können Montagevorgänge ohne Hilfe von Werkzeugen oder Vorrichtungen kaum durchgeführt werden.

Die DE 10 2006 036 231 A1 beschreibt eine Filtervorrichtung mit einer Anordnung zur Bildung einer Abdichtung zwischen Bauteilen, die Abdichtzonen aufweisen, die bei einer Funktionsstellung der Bauteile einander zugewandt sind, wobei die Abdichtzone des einen Bauteils an einer Elementaufnahme eines Filtergehäuses und die Abdichtzone des anderen Bauteils an einem in das Filtergehäuse einsetzbaren und aus diesem herausnehmbaren Filterelement vorgesehen sind, wobei zur Bildung einer Radialdichtung an der Abdichtzone des einen Bauteils ein Dichtelement und an der Abdichtzone des anderen Bauteils eine Dichtfläche vorgesehen sind und die Bauteile durch eine in Axialrichtung erfolgende Relativbewegung in Funktionsstellung bringbar sind, in der das Dichtelement mit der Dichtfläche abdichtend zusammenwirkt.

Die GB 2 054 768 A offenbart eine Anordnung, bei der in einem Körper ein Schaft drehbar angeordnet ist, wobei der Körper gegenüber dem Schaft über eine Lippendichtung abgedichtet ist. Die Lippendichtung weist einen im Querschnitt U-förmigen Dichtring auf, dessen Schenkel durch ein keilförmiges Teil aufspreizbar sind, um die Dichtflächen des Dichtrings am Körper und Schaft zur Anlage zu bringen.

Im Hinblick auf diese Problematik stellt sich die Erfindung die Aufgabe, eine Filtervorrichtung zur Verfügung zu stellen, die trotz hoher wirksamer Dichtkräfte das einfache und bequeme Lösen der gebildeten Dichtstellen ermöglicht.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 zeichnet sich die erfindungsgemäße Filtervorrichtung dadurch aus, dass sie ein Drittbauteil aufweist, dem ein Betätigungsteil zugeordnet ist, das bei der Funktionsstellung der Bauteile auf das Dichtelement für die Erhöhung der Dichtkraft verformend einwirkt. Dadurch, dass erfindungsgemäß die die Dichtkraft erhöhende Verformung durch die Einwirkung des Betätigungsteils erfolgt, wenn sich die Bauteile in der Funktionsstellung befinden, lässt sich das unverformte Dicht-element so dimensionieren, dass die für Ein- und Ausbau erfolgenden Relativbewegungen der Bauteile einfach und ohne Mühe zu bewerkstelligen sind, weil bei unverformtem Dichtelement keine hohen Reibungskräfte zu überwinden sind. Andererseits lässt sich durch Einwirkung des Betätigungsteils eine entsprechende Verformung erreichen, die die zur Sicherheit der Abdichtung erforderliche Verpressung erzeugt.

Bei einem derartigen Einsatz, bei dem sich große Dichtungsdurchmesser zwischen Elementaufnahme und Filterelement ergeben, wirkt sich die erfindungsgemäß erreichte Erleichterung der Montagevorgänge besonders vorteilhaft aus, zumal die erforderlichen Filterelementwechsel ein häufiges Trennen der betreffenden Dichtstellen erforderlich machen.

Bei einer bevorzugten Ausführungsform der erfindungsgemäßen Anordnung erfolgt die axiale Relativbewegung in einer Längsrichtung zwischen dem Drittbauteil und den beiden anderen Bauteilen, wobei zwei Dichtteile des Dichtelementes zumindest teilweise eine radiale Quer- oder Zustellbewegung quer zur genannten Längsrichtung ausführen und dabei die Radialabdichtung bilden, deren Abdichtwirkung umso mehr verstärkt wird, als das Drittbauteil mit zunehmender axialer Relativbewegung zwischen die beiden Dichtteile gelangt. Die genannte Längsrichtung entspricht dann der zentralen Längsachse der Gesamt-Anordnung.

Sofern das genannte Dichtelement vorzugsweise in der Form eines elastomeren und insoweit nachgiebigen Dichtringes ausgebildet ist, hat dieses bevorzugt im Querschnitt gesehen, eine V-förmige Ausgestaltung und die beiden genannten Dichtteile bilden dann die Schenkel des aufzuspreizenden V-förmigen Dichtringes aus. Anstelle einer V-Form kann auch ein U-förmiger Dichtring gewählt sein, der dann vorzugsweise nach außen hin zusehends konisch verlaufende Schenkelstücke als Dichtteile aufweist.

In besonders vorteilhafter Weise kann die Anordnung so getroffen sein, dass die Dichtfläche am betreffenden Bauteil in Axialrichtung derart verlängert ist, dass als die Abdichtung bildende Funktionsstellungen mehrere relative Axialpositionen der Bauteile zulässig sind. Dadurch, dass die Sicherheit der Abdichtung nicht von der Einhaltung exakter Axialpositionen der Bauteile abhängig ist, erübrigt sich die Notwendigkeit, für die Einbaupositionen der Bauteile eine entsprechend enge Tolerierung vorzusehen. Unter anderem wirkt sich dies besonders vorteilhaft bei Abdichtungen zwischen einem Filterelement und einem Filtergehäuse aus, weil eine besonders einfache und kostengünstige Bauweise dadurch realisierbar ist, dass weder für die Abmessungen des Filterelements noch der Gehäusekomponenten, die das Filterelement an der Elementaufnahme positionieren, besonders enge Toleranzen einzuhalten sind.

Bei einem derartigen Einsatz sind vorzugsweise die Dichtfläche an der Elementaufnahme des Filtergehäuses und das Dichtelement an der Endkappe des zuordenbaren Filtergehäuses vorgesehen.

Mit besonderem Vorteil kann die Anordnung hierbei so getroffen sein, dass das Drittbauteil einen bewegbaren Niederhalter aufweist, der zum Halten des Filterelements in der der Funktionsstellung der Abdichtung entsprechenden Einbauposition in eine an der Endkappe anliegende Wirkposition bewegbar ist, in der das Betätigungsteil auf das Dichtelement einwirkt.

Das Dichtelement kann bei besonders bevorzugten Ausführungsbeispielen zumindest teilweise einen V-förmigen Querschnitt mit einem am Außenumfang der Endkappe des Filterelements anliegenden und einem mit der Dichtfläche der Elementaufnahme zusammenwirkenden Schenkel aufweisen, wobei als Betätigungsteil ein am Niederhalter vorspringender Ring vorgesehen ist, der bei an der Endkappe anliegendem Niederhalter das Dichtelement durch Aufspreizen der Schenkel zwischen Endkappe und Dichtfläche verpresst. Eine derartige Bauweise ist in mehrerer Hinsicht vorteilhaft.

Zum einen ergibt sich eine einfache Bauweise des aus Filtergehäuse und Filterelement bestehenden Systems, da der Niederhalter gleichzeitig als Halteelement des Filterelements und als Betätigungselement für die Dichtungsanordnung fungiert, indem das Betätigungsteil des Niederhalters durch Eintritt zwischen die Schenkel des Dichtelements dessen aufspreizende Verformung und damit die Erhöhung der Dichtkraft bewirkt. Zum anderen erfolgt die Betätigung, d.h. die Aktivierung der Dichtungsanordnung, praktisch selbsttätig im Zuge des Festlegens des Filterelements an der Elementaufnahme durch das Heranbewegen des Niederhalters an die Endkappe.

Weitere mögliche Ausgestaltungen der Erfindung sind in zusätzlichen Unteransprüchen angegeben.

Nachstehend ist die Erfindung anhand von in der Zeichnung dargestellten Ausführungsbeispielen im Einzelnen erläutert. Es zeigen:
- Fig. 1: einen in perspektivischer Schrägansicht und mit Unterbrechungen dargestellten Längsschnitt einer Filtervorrichtung, bei der ein Ausführungsbeispiel der erfindungsgemäßen Anordnung zur Bildung einer Abdichtung vorgesehen ist;
- Fig. 2: eine stark vergrößert und in perspektivischer Schrägansicht gezeichnete Teildarstellung, wobei lediglich ein Teilabschnitt der Elementaufnahme des Filtergehäuses von Fig. 1 und eines damit zusammenwirkenden Teils eines Filterelements mit an dessen Endkappe befindlichem Dichtelement gemäß dem Ausführungsbeispiel der erfindungsgemäßen Anordnung dargestellt sind;
- Fig. 3: einen vergrößert gezeichneten Teillängsschnitt, der ein zweites Ausführungsbeispiel der erfindungsgemäßen Anordnung sowie von einer zugehörigen Filtervorrichtung lediglich die mit der Dichtungsanordnung zusammenwirkenden Teile zeigt;
- Fig. 4: einen Teillängsschnitt lediglich der mit dem Dichtelement gemäß dem zweiten Ausführungsbeispiel versehen Endkappe des ansonsten nicht gezeigten Filterelements und eines mit der Endkappe zusammenwirkenden Niederhalters; und
- Fig. 5: in vergrößerter Darstellung den in Fig. 4 mit V bezeichneten Bezirk.

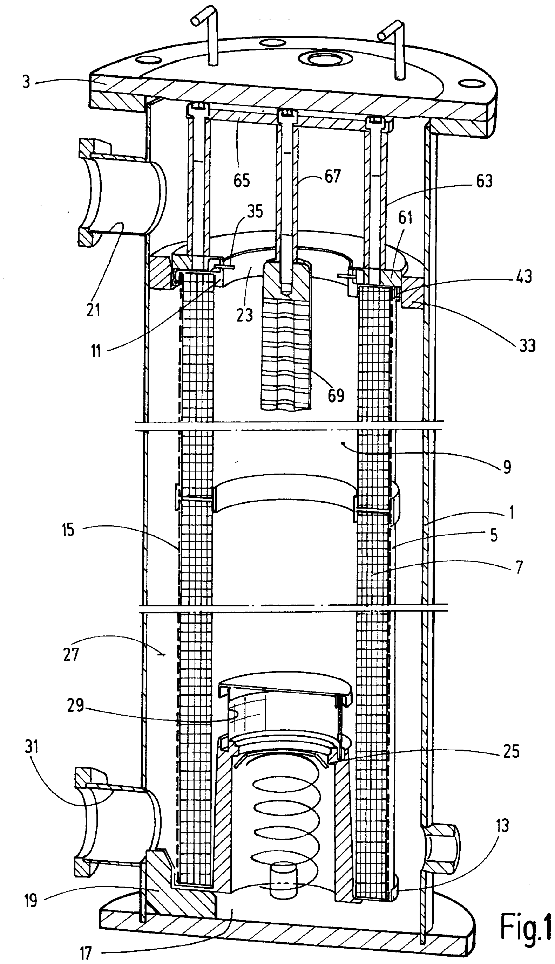

Die Erfindung ist nachstehend anhand von Ausführungsbeispielen erläutert, bei denen die erfindungsgemäße Anordnung bei einer Filtervorrichtung zur Bildung einer Abdichtung zwischen einer Elementaufnahme eines Filtergehäuses und einer Endkappe eines Filterelements vorgesehen ist, das in das Filtergehäuse einsetzbar und aus diesem herausnehmbar ist. Die Fig. 1 zeigt in teilweise schematisch vereinfachter Darstellung eine entsprechende Filtervorrichtung mit einem hohlzylinderförmigen Filtergehäuse 1, das bodenseitig geschlossen und an seiner Oberseite mit einem abnehmbaren Gehäusedeckel 3 verschließbar ist. Das im Filtergehäuse 1 aufnehmbare Filterelement 5 weist in der bei derartigen Elementen üblichen Weise ein Filtermedium 7 auf, das in Form eines Hohlzylinders einen inneren Filterhohlraum 9 umgibt und dessen Enden von einer oberen Endkappe 11 und einer unteren Endkappe 13 eingefasst sind. Da das Filterelement 5 beim Filtrationsbetrieb für eine Durchströmung vom inneren Filterhohlraum 9 nach außen hin vorgesehen ist, ist das Filtermedium 7 von einem äußeren Stützrohr 15 umgeben, das sich von Endkappe 11 zu Endkappe 13 erstreckt. Bei der in Fig. 1 gezeigten, eingebauten Funktionsstellung des Filterelements 5 ist die bodenseitige Endkappe 13 vom Gehäuseboden 17 mittels mehrerer, vorzugsweise dreier Fußteile 19 in einem Abstand gehalten. Von den Fußteilen 19 ist bei der in Fig. 1 gezeigten Drehposition lediglich eines der vorgesehenen Fußteile 19 sichtbar.

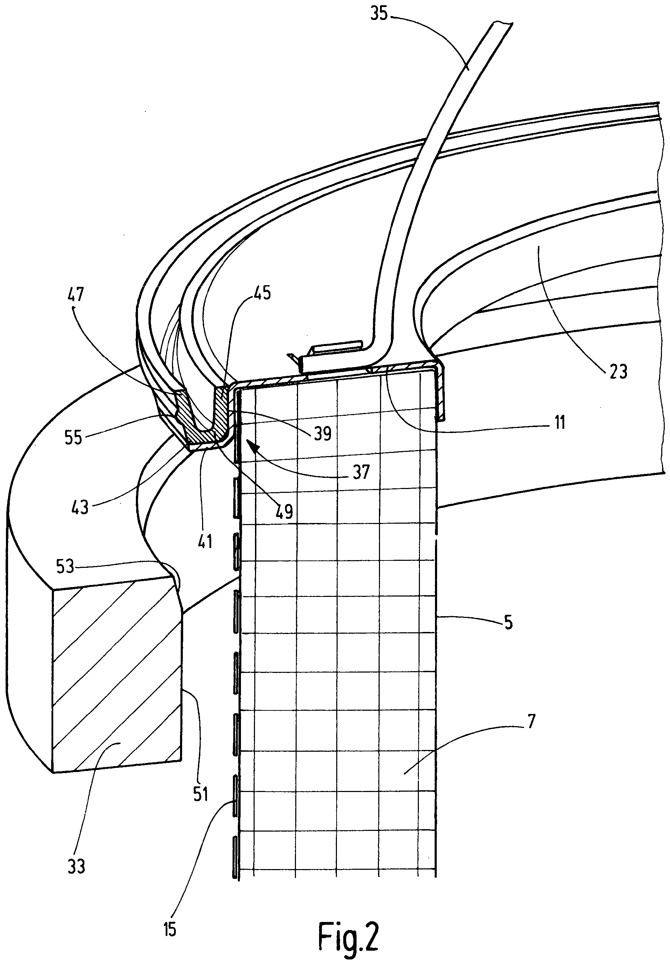

Für die Zufuhr des zu filternden Fluids weist das Filtergehäuse 1 einen Einlass 21 auf, der oberhalb der oberen Endkappe 11 des Filterelements 5 einmündet. Die obere Endkappe 11 weist eine in den inneren Filterhohlraum 9 führende zentrale Öffnung 23 auf, so dass sich die Roh- oder Schmutzseite vom Einlass 21 bis zum inneren Filterhohlraum 9 fortsetzt. Den bodenseitigen Abschluss des Filterhohlraums 9 und damit der Rohoder Schmutzseite beim Filtervorgang, bildet ein Bypassventil 25, das den Fluiddurchtritt vom Filterhohlraum 9 durch die Endkappe 13 zum Gehäuseboden 17 hin bei einem entsprechenden Differenzdruck freigibt. Da derartige Bypassventile Stand der Technik sind, ist in der Fig. 1 das Bypassventil 25 lediglich schematisiert angedeutet. Damit bei einem Ansprechen des Bypassventils 25 kein ungehinderter Schmutzübergang zum Gehäuseboden 7 und damit zu der das Filter-element 5 umgebenden Reinseite 27 hin erfolgt, ist dem Bypassventil 25 ein Sieb 29 vorgeschaltet. Für den Fluidaustritt aus der Reinseite 27 ist am Gehäuse 1 ein Auslass 31 vorgesehen.
Für die Festlegung des Filterelements 5 in der Funktionsstellung weist das Filtergehäuse 1 eine Elementaufnahme in Form eines Ringkörpers auf, der in Zusammenwirkung mit dem Umfangsbereich der oberen Endkappe 11 des Filterelements 5 die erfindungsgemäße Dichtungsanordnung bildet, durch die die Roh- oder Schmutzseite gegenüber der an der Außenseite des Filterelements 5 befindlichen Reinseite 27 abgedichtet ist. Nähere Einzelheiten eines ersten Ausführungsbeispiels der diesbezüglichen, erfindungsgemäßen Anordnung sind in Fig. 2 gezeigt. Wie hieraus ersichtlich, weist die Endkappe 11, an deren Oberseite ein schwenkbarer Haltebügel 35 angebracht ist, an ihrem Außenumfang einen Absatz 37 auf, der eine innere Zylinderfläche 39 bildet, die durch einen radialen Vorsprung 41 begrenzt ist, und insoweit ist eine Abdichtzone 37 gebildet. Dadurch ist ein Sitz für ein Dichtelement in Form einer V-förmigen Formdichtung 43 gebildet. Diese ist beim vorliegenden Beispiel aus einem elastomeren Material, etwa einem synthetischen Kautschuk, gebildet. Die Formdichtung 43 liegt mit ihrem inneren Schenkel 45 an der Zylinderfläche 39 an und ist an dieser durch die Eigenspannung der Formdichtung 43 und/oder durch Verkleben gesichert. Der andere V-Schenkel 47, der mit dem inneren Schenkel 45 über einen Profilsteg 49 verbunden ist, ist für die Zusammenwirkung mit einer Dichtfläche 51 der Elementaufnahme vorgesehen. Die kreiszylindrische Dichtfläche 51 weist an ihrem in Fig. 2 oben liegenden Einführende eine Einführschräge 53 auf. Der für die Abdichtung an der Dichtfläche 51 vorgesehene, äußere V-Schenkel 47 der Formdichtung 43 weist einen radial vorspringenden Dichtwulst 55 auf. Der genannte Dichtwulst 55 kann für bestimmte Anwendungen auch entfallen, ohne dass die Dichtwirkung beeinträchtigt wäre.

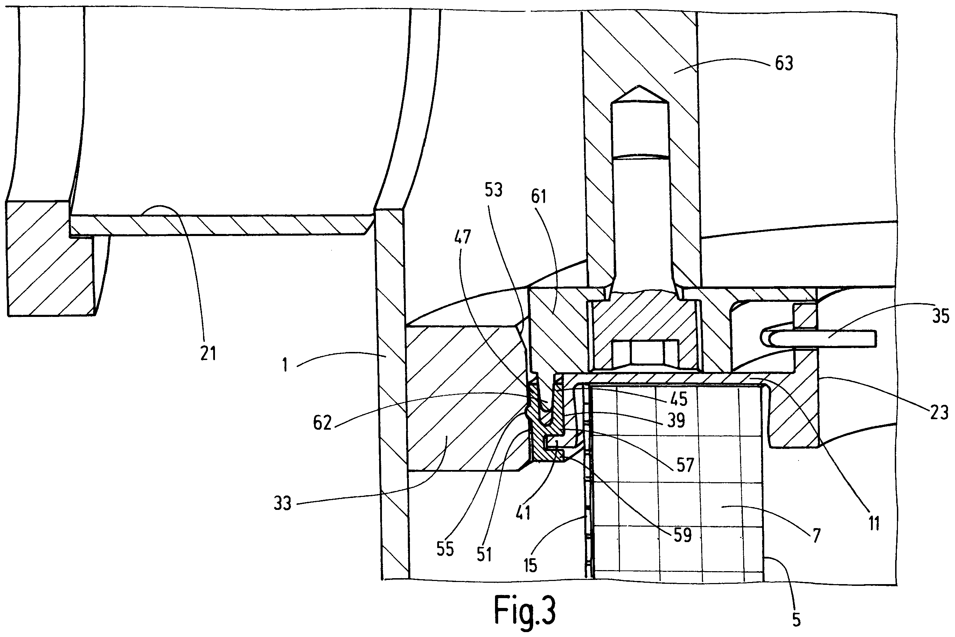

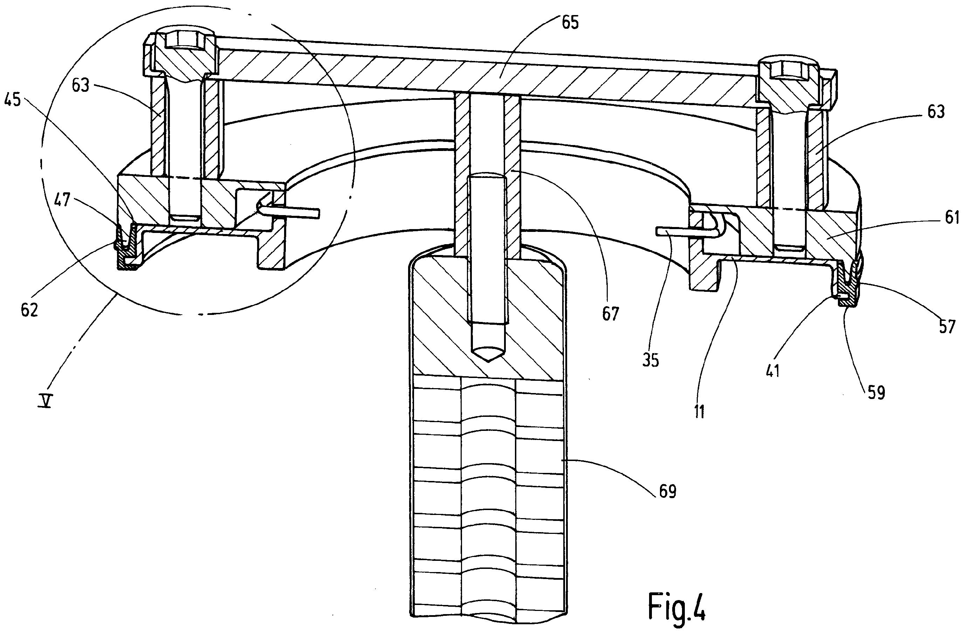

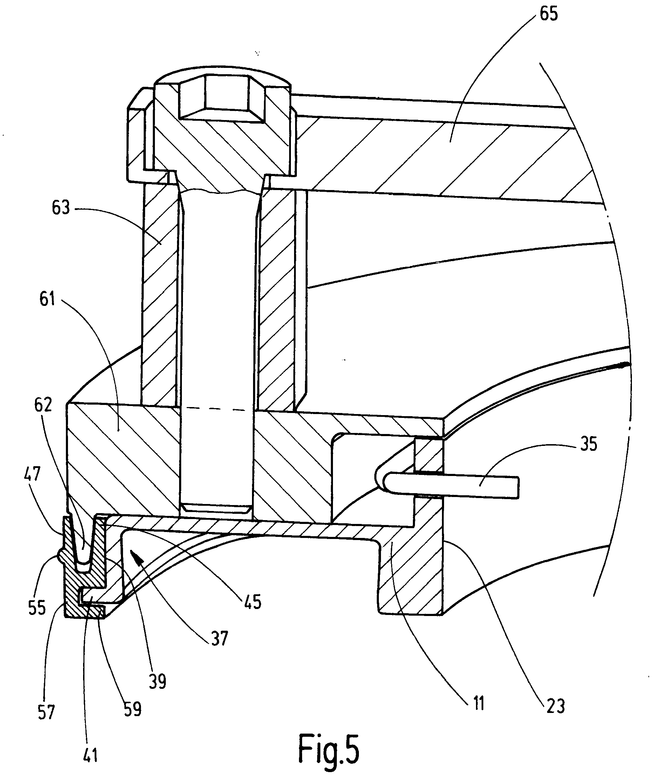

Die Fig. 3 bis 5 zeigen ein zweites Ausführungsbeispiel der erfindungsgemäßen Anordnung, das sich vom ersten Beispiel lediglich durch eine abgewandelte Formgebung des Dichtelements unterscheidet. Diese abgewandelte Formdichtung 57 entspricht in dem oberhalb des Steges 49 gelegenen, die Schenkel 45 und 47 bildenden Bereich, der Formdichtung 43 von Fig. 2, wobei sich jedoch an die Unterseite des die Schenkel 45, 47 verbindenden Steges 49 ein Ansatz 59 anschließt, der zusammen mit dem Steg 49 ein U-Profil bildet. Der so gestaltete Ansatz 59 umgreift den den Rand der Zylinderfläche 39 bildenden, radialen Vorsprung 41 der Endkappe 11. Dadurch ist eine formschlüssige Sicherung der Formdichtung 57 gegen Axialverschiebung gebildet, so dass diese bei axialen Belastungen, die bei Montagevorgängen auftreten, sicher festgelegt ist.
Die Fig. 1 und 3 zeigen die Einbausituation bei vervollständigter Dichtungsanordnung gemäß dem ersten bzw. dem zweiten Ausführungsbeispiel. Bei beiden Ausführungsbeispielen ist für die eigentliche Betätigung der Anordnung ein Drittbauteil vorgesehen, das ein Betätigungsteil aufweist, das bei der Funktionsstellung auf die Formdichtung 43 bzw. 57 derart verformend einwirkt, dass durch einen keilartigen Eingriff in den Zwischenraum der V-Schenkel 45, 47 diese zwischen Zylinderfläche 39 der Endkappe 11 und der Dichtfläche 51 an der Elementaufnahme 33 verpresst werden. Während bei Einbauvorgängen der äußere Schenkel 47 lediglich unter Einwirkung seiner Eigenspannung über die Einführschräge 53 zur Dichtfläche 51 gelangt, liegt der Schenkel 47 nach der aufspreizenden Verformung der Formdichtung 43, 57 mit der für eine absolut sichere Abdichtung erforderlichen, hohen Dichtkraft an der Dichtfläche 51 an.

Bei beiden hier gezeigten Ausführungsbeispielen ist, wie den Fig. 1 und 3 bis 5 zu entnehmen ist, das Drittbauteil, das das die Formdichtung 43, 57 verformende Betätigungsteil aufweist, durch einen Ringkörper 61 gebildet, der an die Oberseite der Elementkappe 11 anlegbar ist und der als Niederhalter dient, um das Filterelement 5 in der der Funktionsstellung der Dichtungsanordnung entsprechenden Einbauposition an der Elementaufnahme 33 axial zu sichern. Als eigentliches Betätigungsteil ist am Umfangsbereich des Ringkörpers 61 ein axial vorspringender, sich konisch verjüngender Ring 62 vorgesehen, der bei der Funktionsstellung, siehe insbesondere Fig. 3, als Spreizkörper zwischen den Schenkeln 45, 47 wirksam ist, um die Dichtkraft zu verstärken, mit der der Schenkel 47 mit seinem Dichtwulst 55 an der Dichtfläche 51 anliegt. Wie ebenfalls aus Fig. 3 am deutlichsten ersichtlich ist, ist die axiale Länge der Dichtfläche 51 derart bemessen, dass für die sichere Abdichtung mehrerer relative Axialstellungen der Formdichtung 43, 57 an der Dichtfläche 51 zulässig sind. Dadurch erübrigt sich die Notwendigkeit, für die Positionierung des als Niederhalter für das Filterelement 5 vorgesehenen Ringkörpers 61 Bauteile vorzusehen, die enge Toleranzgrenzen einhalten.

Als dem Ringkörper 61 zugehörige, diesbezügliche Bauteile sind bei den hier gezeigten Beispielen jeweils axial verlaufende Stützen 63 vorgesehen, die an ihrer Unterseite mit dem Ringkörper 61 und am oberen Ende mit einem Magnethalter 65 verschraubt sind. Über die Stützen 63 ist der Ringkörper 61 am Gehäusedeckel 3 abgestützt, siehe Fig. 1. Im Zentralbereich des Magnethalters 65 ist ein Verbindungsteil 67 für eine sog. Magnetkerze 69 angebracht, die sich über die Öffnung 23 der Endkappe 11 in den Filterhohlraum 9 des Filterelements 5 erstreckt. Derartige, mit einer Permanentmagneteinrichtung versehene Magnetkerzen 69 sind Stand der Technik.

Bei den hier beschriebenen Beispielen, bei denen die Öffnung des V-Profils der Formdichtungen 43, 57 beim Filtrationsbetrieb der Rohseite und damit der Seite des höheren, an der Dichtstelle wirkenden Druckes zugewandt ist, ergibt sich im Betrieb eine Druckaktivierung der Dichtungsanordnung, zusätzlich zu der durch Verformung des Dichtelements (Formdichtung 43, 57) bewirkten Verstärkung der Dichtkraft.

## Patentansprüche

1. Filtervorrichtung mit einer Anordnung zur Bildung einer Abdichtung zwischen Bauteilen (11, 33), die Abdichtzonen (37, 51) aufweisen, die bei einer Funktionsstellung der Bauteile einander zugewandt sind, wobei die Abdichtzone des einen Bauteils an einer Elementaufnahme eines Filtergehäuses (1) und die Abdichtzone des anderen Bauteils (11) an einem in das Filtergehäuse (1) einsetzbaren und aus diesem herausnehmbaren Filterelement (5) vorgesehen sind, wobei zur Bildung einer Radialdichtung an der Abdichtzone (37, 51) des einen Bauteils (11, 33) ein Dichtelement (43; 57) und an der Abdichtzone (37, 51) des anderen Bauteils (11, 33) eine Dichtfläche (51) vorgesehen sind und die Bauteile (11, 33) durch eine in Axialrichtung erfolgende Relativbewegung in Funktionsstellung bringbar sind, in der das Dicht-element (43; 57) mit der Dichtfläche (51) abdichtend zusammenwirkt, **dadurch gekennzeichnet, dass** die Anordnung ein Drittbauteil (61) aufweist, dem ein Betätigungsteil (62) zugeordnet ist, das bei der Funktionsstellung der Bauteile (11, 33) auf das Dichtelement (43; 57) für die Erhöhung der Dichtkraft verformend einwirkt.

2. Filtervorrichtung nach Anspruch 1, **dadurch gekennzeichnet, dass** durch die axiale Relativbewegung zwischen dem Drittbauteil (61) und den beiden anderen Bauteilen (11, 33) in Längsrichtung zwei Dichtteile (45, 47) des Dichtelementes (43, 57) zumindest teilweise eine radiale Zustellbewegung quer zur Längsrichtung ausführen und dabei die Radialabdichtung bilden, deren Abdichtwirkung umso stärker wird, je mehr das Drittbauteil (61) mit zunehmender axialer Relativbewegung zwischen die beiden Dichtteile (45, 47) gelangt.

3. Filtervorrichtung nach einem der vorstehenden Ansprüche, **dadurch gekennzeichnet, dass** die Dichtfläche (51 am betreffenden Bauteil (33) in Axialrichtung derart verlängert ist, dass als die Abdichtung bildende Funktionsstellungen mehrere relative Axialpositionen der Bauteile (11, 33) zulässig sind.

4. Filtervorrichtung nach einem der vorstehenden Ansprüche, **dadurch gekennzeichnet, dass** die Dichtfläche (51) an der Elementaufnahme des Filtergehäuses (1) und das Dichtelement (43; 57) an der Endkappe (11) des zuordenbaren Filterelementes (5) vorgesehen sind.

5. Filtervorrichtung nach einem der vorstehenden Ansprüche, **dadurch gekennzeichnet, dass** das Drittbauteil einen bewegbaren Niederhalter (61) aufweist, der zum Halten des Filterelementes (5) in der der Funktionsstellung der Abdichtung entsprechenden Einbauposition in eine an der Endkappe (11) des betreffenden Filterelements (5) anliegende Wirkposition bewegbar ist, in der das Betätigungsteil (62) auf das Dichtelement (43; 57) einwirkt.

6. Filtervorrichtung nach einem der vorstehenden Ansprüche, **dadurch gekennzeichnet, dass** zumindest ein Teil des Dichtelements (43; 57) einen V-förmigen Querschnitt mit einem am Außenumfang (37, 39) der Endkappe (11) des Filterelementes (5) anliegenden (45) und einem mit der Dichtfläche (51) der Elementaufnahme zusammenwirkenden Schenkel (47) aufweist und dass als Betätigungsteil ein am Niederhalter (61) vorspringender Ring (62) vorgesehen ist, der bei an der Endkappe (11) anliegendem Niederhalter (61) das Dichtelement (43; 57) durch Aufspreizen der Schenkel (45, 47) zwischen Endkappe (11) und Dichtfläche (51) verpresst.

7. Filtervorrichtung nach einem der vorstehenden Ansprüche, **dadurch gekennzeichnet, dass** die Dichtfläche (51) der Elementaufnahme durch eine Zylinderfläche gebildet ist, an deren einem Ende eine die Zylinderfläche radial erweiternde Einführschräge (53) gebildet ist.

8. Filtervorrichtung nach einem der vorstehenden Ansprüche, **dadurch gekennzeichnet, dass** am Außenumfang der Endkappe (11) für die Anlage des zugeordneten Schenkels (45) des Dichtelementes (43; 57) eine Zylinderfläche (39) vorgesehen ist, die an einem Ende in einen radial vorspringenden Rand (41) übergeht, an dem ein die Schenkel (45, 47) verbindender Steg (49) des Dichtelements (43; 57) anliegt.

9. Filtervorrichtung nach einem der vorstehenden Ansprüche, **dadurch gekennzeichnet, dass** das Dichtelement (57) einen sich an den Steg (49) anschließenden, einen U-Querschnitt bildenden Ansatz (59) aufweist, der den vorspringenden Rand (41) der Endkappe (11) umgreift.

## Claims

1. A filter device with an assembly for forming a seal between components (11, 33) which have sealing zones (37, 51) that face one another when the components are in a functional position, the sealing zone of the one component being provided on an element holder of a filter housing (1), and the sealing zone of the other component (11) being provided on a filter element (5) that can be inserted into the filter housing (1) and be removed from the latter, in order to form a radial seal on the sealing zone (37, 51) of the one component (11, 33) a sealing element (43; 57), and on the sealing zone (37, 51) of the other component (11, 33) a sealing surface (51) being provided, and the components (11, 33) being able to be brought by a relative movement taking place in the axial direction into the functional position in which the sealing element (43; 57) interacts in a sealing manner with the sealing surface (51), **characterised in that** the assembly has a third component (61) to which an actuating part (62) is assigned which acts on the sealing element (43; 57) in the functional position of the components (11, 33) so as to deform said element in order to increase the sealing force.

2. The filter device according to Claim 1, **characterised in that** by means of the axial relative movement in a longitudinal direction between the third component (61) and the two other components (11, 33), two sealing parts (45, 47) of the sealing element (43, 57) execute, at least partially, a radial delivering movement transverse to the longitudinal direction and thereby form the radial seal, the sealing effect of which is increased all the more as, with increasing axial relative movement, the third component (61) passes between the two sealing parts (45, 47).

3. The filter device according to any of the preceding claims, **characterised in that** the sealing surface (51) on the respective component (33) is extended in the axial direction such that a number of relative axial positions of the components (11, 33) are permissible as functional positions forming the seal.

4. The filter device according to any of the preceding claims, **characterised in that** the sealing surface (51) is provided on the element holder of the filter housing (1) and the sealing element (43; 57) is provided on the end cap (11) of the assignable filter element (5).

5. The filter device according to any of the preceding claims, **characterised in that** the third component has a moveable hold-down (61) which, in order to hold the filter element (5) in the installation position corresponding to the functional position of the seal, can be moved into an active position adjacent to the end cap (11) of the respective filter element (5) in which the actuating part (62) acts on the sealing element (43; 57).

6. The filter device according to any of the preceding claims, **characterised in that** at least part of the sealing element (43; 57) has a V-shaped cross-section with one arm (47) abutting the outer periphery (37, 39) of the end cap (11) of the filter element (5) and one arm (45) interacting with the sealing surface (51) of the element holder, and that an actuating part in the form of a ring (62) projecting on the hold-down (61) is provided which compresses the sealing element (43; 57) at the hold-down (61) adjacent to the end cap (11) by spreading the arms (45, 47) between the end cap (11) and the sealing surface (51).

7. The filter device according to any of the preceding claims, **characterised in that** the sealing surface (51) of the element holder is formed by a cylindrical surface on one end of which an insertion chamfer (53) extending the cylindrical surface radially is formed.

8. The filter device according to any of the preceding claims, **characterised in that** a cylindrical surface (39) is provided on the outer periphery of the end cap (11) for supporting the assigned arm (45) of the sealing element (43; 57), which cylindrical surface merges at one end into a radially projecting edge (41) on which a web (49) of the sealing element (43; 57) connecting the arms (45, 57) rests.

9. The filter device according to any of the preceding claims, **characterised in that** the sealing element (57) has a step (50) forming a U-shaped cross-section that adjoins the web (49), which step encloses the projecting edge (41) of the end cap (11).

## Revendications

1. Dispositif de filtration ayant un agencement pour former une étanchéité entre des pièces 11, 33) ayant des zones (37, 51) d'étanchéité tournées l'une vers l'autre dans une position fonctionnelle des pièces, la zone d'étanchéité de l'une des pièces étant prévue sur un logement d'élément d'un corps (1) de filtre et la zone d'étanchéité de l'autre pièce (11) sur un élément (5) filtrant pouvant être inséré dans le corps (1) de filtre et pouvant en être retiré, dans lequel, pour former une étanchéité radiale, il est prévu, sur la zone (37, 51) d'étanchéité de l'une des pièces (11, 33), un élément (43; 57) d'étanchéité et sur la zone (37, 51) d'étanchéité de l'autre pièce (11, 33), une surface (51) d'étanchéité et les pièces (11, 33) peuvent être mises, par un mouvement relatif s'effectuant dans une direction axiale, en une position fonctionnelle, dans laquelle l'élément (43; 57) d'étanchéité coopère avec étanchéité avec la surface (51) d'étanchéité, **caractérisé en ce que** l'agencement a une troisième pièce (61), à laquelle est associée une partie (62) d'actionnement, qui, en la position fonctionnelle des pièces (11, 33), agit avec déformation sur l'élément (43; 57) d'étanchéité pour augmenter la force d'étanchéité.

2. Dispositif de filtration suivant la revendication 1, **caractérisé en ce que**, par le déplacement axial relatif entre la troisième pièce (61) et les deux autres pièces (11, 33) dans la direction longitudinale, deux parties (45, 47) d'étanchéité de l'élément (43, 57) d'étanchéité exécutent, au moins en partie, un mouvement d'avance radiale transversalement à la direction longitudinale et forment ainsi l'étanchéité radiale, dont l'effet d'étanchéité est d'autant plus intense que la troisième pièce (61) arrive, avec un déplacement axial relatif croissant, entre les deux parties (45, 47) d'étanchéité.

3. Dispositif de filtration suivant l'une des revendications précédentes, **caractérisé en ce que** la surface (51) d'étanchéité sur la pièce (33) concernée est prolongée dans la direction axiale, de manière à ce que plusieurs positions axiales relatives des pièces (11, 33) soient accessibles comme positions fonctionnelles formant l'étanchéité.

4. Dispositif de filtration suivant l'une des revendications précédentes, **caractérisé en ce que** la surface (51) d'étanchéité est prévue sur le logement d'élément du corps (1) du filtre et l'élément (43; 57) d'étanchéité est prévu sur la coiffe (11) d'extrémité de l'élément (5) filtrant pouvant être associé.

5. Dispositif de filtration suivant l'une des revendications précédentes, **caractérisé en ce que** la troisième pièce a un serre-flan (61) mobile, qui, pour maintenir l'élément (5) filtrant dans la position de montage correspondant à la position fonctionnelle de l'étanchéité, peut être mis dans une position active s'appliquant à la coiffe (11) d'extrémité de l'élément (5) filtrant concerné, position active dans laquelle la partie (62) d'actionnement agit sur l'élément (43; 57) d'étanchéité.

6. Dispositif de filtration suivant l'une des revendications précédentes, **caractérisé en ce qu'**au moins une partie de l'élément (43; 57) d'étanchéité a une section transversale en forme de V, ayant une branche (45) s'appliquant au pourtour (37, 39) extérieur de la coiffe (11) d'extrémité de l'élément (5) filtrant et une branche (47) coopérant avec la surface (51) d'étanchéité du logement d'élément, et **en ce qu'**il est prévu, comme partie d'actionnement, un anneau (62) faisant saillie du serre-flan (61), anneau qui, lorsque le serre-flan (61) s'applique à la coiffe (11) d'extrémité, presse l'élément (43; 57) d'étanchéité par écartement des branches (45, 47) entre la coiffe (11) d'extrémité et la surface (51) d'étanchéité.

7. Dispositif de filtration suivant l'une des revendications précédentes, **caractérisé en ce que** la surface (51) d'étanchéité du logement d'élément est formée par une surface de cylindre, à l'une des extrémités de laquelle est formé un biseau (53) d'introduction élargissant radialement la surface du cylindre.

8. Dispositif de filtration suivant l'une des revendications précédentes, **caractérisé en ce que**, sur le pourtour extérieur de la coiffe (11) d'extrémité, est prévue, pour l'application de la branche (45) associée de l'élément (43; 57) d'étanchéité, une surface (39) de cylindre, qui se transforme à une extrémité en un bord (41) faisant saillie radialement, auquel s'applique une âme (49), reliant les branches (45, 47), de l'élément (43; 57) d'étanchéité.

9. Dispositif de filtration suivant l'une des revendications précédentes, **caractérisé en ce que** l'élément (57) d'étanchéité a un appendice (59) se raccordant à l'âme (49) et formant une section transversale en U, appendice qui entoure le bord (41) en saillie de la coiffe (11) d'extrémité.
